# FASCICULE DE BREVET EUROPEEN

(11) **EP 0 894 851 B1**
(45) Date de publication et mention de la délivrance du brevet: **28.05.2003**
(21) Numéro de dépôt: 98401788.9
(22) Date de dépôt: 16.07.1998
(51) Int. Cl.: C11D 7/50, C23G 5/028, F26B 5/00, C11D 11/00

(54) **Mélange quasi azéotropique à base de 1,1,1,3,3-pentafluorobutane, de chlorure de méthylène et de méthanol pour le traitement de surfaces solides**
Quasi-azeotrope Mischungen auf Basis von 1,1,1,3,3,-Pentafluorobutan, Methylene Chloride und Methanol zur Behandlung von festen Oberflächen
Near azeotropic mixtures based on 1,1,1,3,3-pentafluorobutane, methylene chloride and methanol for treatment of solid surfaces

(30) Priorité: 31.07.1997 FR 9709775
(43) Date de publication de la demande: 03.02.1999
(73) Titulaire: Atofina, 92091 Paris La Défense (FR)
(72) Inventeur: Michaud, Pascal, 95210 Saint-Gratien (FR)

(56) Documents cités:
- US-A- 5 350 534

## Description

La présente invention concerne le domaine des hydrocarbures fluorés et a plus particulièrement pour objet un nouveau mélange quasi azéotropique utilisable dans diverses opérations de traitement de surfaces solides, en particulier pour le séchage, le nettoyage, le dégraissage ou le nettoyage à sec de surfaces solides.

Le 1,1,2-trichloro-1,2,2-trifluoroéthane (connu dans le métier sous la désignation F113) a été largement utilisé dans l'industrie pour le nettoyage et le dégraissage de surfaces solides très diverses (pièces métalliques, verres, plastiques, composites). Outre son application en électronique au nettoyage des flux de soudure pour éliminer le flux décapant qui adhère aux circuits imprimés, on peut mentionner ses applications au dégraissage de pièces métalliques lourdes et au nettoyage de pièces mécaniques de haute qualité et de grande précision comme, par exemple, les gyroscopes et le matériel militaire, aérospatial ou médical. Dans ses diverses applications, le F113 était le plus souvent associé à d'autres solvants organiques (par exemple le méthanol), de préférence sous forme de mélanges azéotropiques ou quasi azéotropiques qui ne démixent pas et qui, employés au reflux, ont sensiblement la même composition dans la phase vapeur que dans la phase liquide.

Le F113 était également utilisé dans l'industrie pour le séchage ou démouillage de divers substrats solides après leur nettoyage en milieu aqueux. Dans cette application destinée à éliminer l'eau subsistant sur la surface des substrats nettoyés, le F113 était souvent additionné d'un ou plusieurs agents tensio-actifs (voir par exemple les brevets FR 2 353 625, FR 2 527 625, EP 90677 et 189 436, ainsi que tes références citées dans ces brevets).

Le F113 faisant partie des chlorofluorocarbures (CFC) suspectés d'attaquer ou de dégrader l'ozone stratosphérique, on a proposé de le remplacer dans ces diverses applications par le 1,1-dichloro-1-fluoroéthane (connu sous la désignation F141b).

Bien que le potentiel de dégradation de l'ozone (ODP) du F141b soit beaucoup plus faible que celui du F113, il n'est cependant pas nul et son utilisation est déjà réglementée.

Pour résoudre ce problème, on a proposé dans le brevet US 5 350 534 de remplacer le F113 ou le F141b par un mélange azéotropique constitué, en poids, de 30 à 69 % de 1,1,1,3,3-pentafluorobutane (F365 mfc), 30 à 60 % de chlorure de méthylène et 1 à 10 % de méthanol. Cependant, la teneur élevée en chlorure de méthylène de ce mélange (30 % minimum) le rend inutilisable pour le traitement des surfaces solides constituées totalement ou partiellement de matières plastiques fragiles car son emploi engendre des craquelures ou des fissures sur ces matières et/ou les rend collantes.

Il a maintenant été trouvé qu'on peut remédier à cet inconvénient et conserver l'essentiel des avantages du mélange azéotropique précité en utilisant un mélange ne contenant, en poids, pas plus de 15 % de chlorure de méthylène, le reste étant constitué pour 75 à 95 % pur du F365 mfc et 1 à 10 % de méthanol, la teneur minimale en chlorure de méthylène étant de 1 %.

Ce mélange permet de nettoyer sans inconvénient des matériaux sensibles tels que les copolymères acrylonitrile-butadiène-styrène (ABS), les polycarbonates (PC) et les polyméthacrylates de méthyle (PMMA). D'autre part, ce mélange ne présente pas de point éclair dans les conditions standard de détermination (norme ASTM D 3828) et permet donc de travailler en toute sécurité.

Un mélange plus particulièrement préféré selon l'invention contient, en poids, de 85 à 90 % de F365 mfc, de 5 à 10 % de chlorure de méthylène et de 2 à 5 % de méthanol.

Comme dans les compositions connues à base de F113 ou de F141b, les mélanges selon l'invention peuvent, si on le désire, être stabilisés contre l'hydrolyse et/ou les attaques radicalaires susceptibles de survenir durant les processus de nettoyage. A cet effet, on leur ajoute un stabilisant usuel tel que, par exemple, un nitroalcane, un acétal ou un époxyde, la proportion de stabilisant pouvant aller de 0,01 à 5 % par rapport au poids total du mélange.

Les mélanges selon l'invention peuvent être utilisés dans les mêmes conditions et selon les mêmes techniques que les compositions antérieures à base de F113 ou de F141b.

Les mélanges selon l'invention dissolvent les produits siliconés, en particulier les graisses silicones. Ils peuvent donc être utilisés pour nettoyer des pièces présentant en surface des dérivés siliconés ou pour déposer de tels dérivés sur ces pièces, par exemple en trempant ces pièces dans une solution de silicone dans un mélange selon l'invention.

Les mélanges selon l'invention sont ininflammables et rapidement évaporables. Ils peuvent donc être utilisés, en toute sécurité, dans les imprimantes laser rapides.

Les exemples suivants illustrent l'invention sans la limiter.

### EXEMPLE 1

Dans une cuve de nettoyage à ultrasons, on a introduit 150 g d'un mélange contenant en poids 89 % de F365 mfc, 3,5 % de méthanol, 7 % de chlorure de méthylène et 0,5 % de nitrométhane (stabilisant).

Après avoir mis le système à reflux pendant une heure, on a prélevé un aliquot de la phase vapeur. Son analyse, par chromatographie en phase gazeuse (voir tableau suivant), a montré que la composition du mélange ne change pratiquement pas et qu'il est stabilisé dans la phase vapeur.

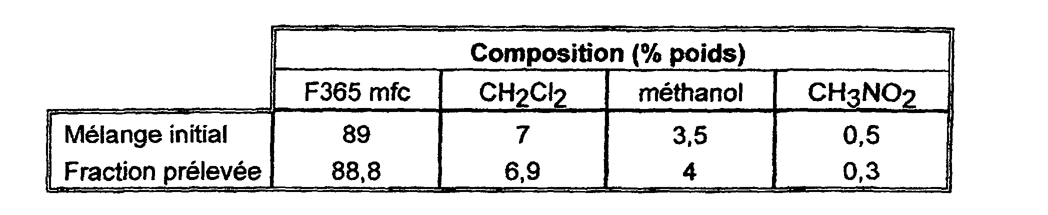

### EXEMPLE 2

Cinq circuits tests (modèle normalisé IPC-B-25) ont été enduits de flux à base de colophane (flux R8F de la Société ALPHAMETAL) et recuits dans une étuve à 220°C pendant 30 secondes.

Ces circuits ont été nettoyés à l'aide du mélange quasi azéotropique de l'exemple 1, dans une petite machine à ultrasons pendant 3 minutes par immersion et 3 minutes en phase vapeur.

Le nettoyage a été évalué selon la procédure normalisée IPC 2.3.26 à l'aide d'un conductimètre de précision. La valeur obtenue, 2,2 µg/cm² éq.NaCl, est inférieure au seuil d'impuretés ioniques toléré par la profession (2,5 µg/cm² éq.NaCl).

## Revendications

1. Mélange quasi azéotropique constitué de, en poids, 75 à 95 % de 1,1,1,3,3-pentafluorobutane, 1 à 15 % de chlorure de méthylène, et 1 à 10 % de méthanol.

2. Mélange selon la revendication 1 contenant 85 à 90 % de 1,1,1,3,3-pentafluorobutane, 5 à 10 % de chlorure de méthylène et 2 à 5 % de méthanol.

3. Mélange selon la revendication 1 ou 2 comprenant en outre au moins un stabilisant.

4. Mélange selon la revendication 3 dans lequel la proportion de stabilisant est de 0,01 à 5 % par rapport au poids total du mélange.

5. Application d'un mélange selon l'une des revendications 1 à 4 au traitement de surfaces solides, en particulier au défluxage des circuits imprimés et au dégraissage des pièces mécaniques.

6. Application d'un mélange selon l'une des revendications 1 à 4 au séchage ou démouillage de surfaces solides.

## Patentansprüche

1. Quasi-azeotrope Mischung, bestehend aus 75 bis 95 Gew.-% 1,1,1,3,3-Pentafluorbutan, 1 bis 15 Gew.-% Methylenchlorid und 1 bis 10 Gew.-% Methanol.

2. Mischung nach Anspruch 1, enthaltend 85 bis 90 % 1,1,1,3,3-Pentafluorbutan, 5 bis 10 % Methylenchlorid und 2 bis 5 % Methanol.

3. Mischung nach Anspruch 1 oder 2, enthaltend außerdem mindestens einen Stabilisator.

4. Mischung nach Anspruch 3, in der die Menge an Stabilisator 0,01 bis 5 % beträgt, bezogen auf das Gesamtgewicht der Mischung.

5. Verwendung einer Mischung nach einem der Ansprüche 1 bis 4 zur Behandlung fester Oberflächen, insbesondere zur Entfernung von Flußmitteln bei gedruckten Schaltungen und zum Entfetten mechanischer Gegenstände.

6. Verwendung einer Mischung nach einem der Ansprüche 1 bis 4 zur Trocknung oder Entfeuchtung fester Oberflächen.

## Claims

1. Quasi-azeotropic mixture consisting of, by weight, from 75 to 95% of 1,1,1,3,3-pentafluorobutane, from 1 to 15% of methylene chloride, and from 1 to 10% of methanol.

2. Mixture according to Claim 1, containing from 85 to 90% of 1,1,1,3,3-pentafluorobutane, from 5 to 10% of methylene chloride and from 2 to 5% of methanol.

3. Mixture according to Claim 1 or 2, furthermore comprising at least one stabilizer.

4. Mixture according to Claim 3, in which the proportion of stabilizer is from 0.01 to 5% relative to the total weight of the mixture.

5. Application of a mixture according to one of Claims 1 to 4 to the treatment of solid surfaces, in particular to the defluxing of printed circuits and to the degreasing of mechanical parts.

6. Application of a mixture according to one of Claims 1 to 4 to the drying or dewetting of solid surfaces.
